# EUROPEAN PATENT APPLICATION

(11) **EP 4 424 647 A1**
(43) Date of publication of application: **04.09.2024**
(21) Application number: 24160382.8
(22) Date of filing: 28.02.2024
(51) Int. Cl.: C02F 1/52, C02F 101/30, C02F 1/66, C02F 11/04, C02F 1/56

(54) **METHOD AND PLANT FOR TREATING WASTE WATER**

(30) Priority: 28.02.2023 IT 202300003561
(71) Applicant: SDG S.r.l., 36015 Schio (VI) (IT)
(72) Inventor: MARTINI, Giambattista, 36015 Schio (VI) (IT)
(74) Representative: Gallo, Luca

(57) **Abstract**

Method for treating waste water, comprising a step of collection of waste water (Vr) to be treated, comprising at least one organic pollutant compound (C), and a step of addition of an alkaline reagent (Ra) into the waste water (Vr) in order to degrade the organic pollutant compound (C), and obtain alkaline waste water (Va).

In addition, the method comprises a step of maturation of the alkaline waste water (Va), in which the modified molecules (M) coagulate in order to obtain mature waste water (Vm) containing at least one flocculation (F), and a step of separation of the mature waste water (Vm) into at least clarified waters (Vc) and sludge (Vf) mainly containing the flocculation (F).

In addition, the method comprises a step of thickening the sludge (Vf) in order to obtain concentrated sludge (Vfc) and a recovery liquid (Vaq).

In addition, the method comprises a neutralization step in order to reduce the pH of the clarified waters (Vc) and obtain neutral clarified waters (Vcn).

## Description

### Field of application

The present invention regards a method and a plant for treating waste water according to the preamble of the respective independent claims 1 and 7.

The present method and plant for treating waste water are advantageously intended to be used in the field of treating and purifying waters, or in the fields where a waste water treatment is necessary, for example the treatment of waters coming from city sewers, from the food industry, from the leather tanning industry, from the paper industry, and from other processing that employ large quantities of water.

### State of the art

In the field of treating and purifying waste water, in particular waste water containing at least one organic pollutant compound (in the jargon also termed "organic load"), treatment plants are known which are mainly divided into two categories: aerobic and anaerobic. In both cases, the plant is arranged for degrading the aforesaid organic pollutant compound contained in the waste water, i.e. transforming the chemical structure thereof into a less complex structure by means of oxidation in order to make it less harmful and/or simpler to separate. In this manner, such plants are aimed to reduce the quantity of the organic pollutant compound in the waste water so as to render the latter suitable for being newly employed for different purposes, for example in agriculture, or to be released into the environment, for example in waterways or in the sea, without contaminations.

Generally, the aerobic plants are aimed to treat waste water containing a low concentration of organic pollutant compounds, which is expressed in terms of COD (Chemical Oxygen Demand), i.e. as a quantity of oxygen necessary for the complete chemical oxidation of the organic and inorganic compounds present in a water sample. For example, the aerobic plants are aimed to treat waste water in which the pollutant compounds have a concentration in COD generally lower than 10000 ppm.

Otherwise, the anaerobic plants are particularly suitable to treat waste water with high COD load, e.g. greater than 10000 ppm.

Both plant types employ conventional treatment methods, of chemical-physical and/or biologic type.

In particular, the aerobic plants are typically divided into three sections, including a first section, comprising mechanical filters (e.g. membranes and/or tangential filters) and sedimenter devices, in particular primary sedimenters, for physically treating the waste water, so as to remove most of the solids suspended in the water. A subsequent second section comprises one or more tanks, in which the waste water is chemically treated, for example by adding one or more reagents in order to precipitate the salts contained in the water, and a sedimentation device, in which there is the sedimentation of the salts (precipitated salts and other suspended solids) separated via gravity (or via filtration) from the rest of the water. Finally, in a third section, a biological treatment is executed in an aerobic reactor, in which aerobic bacteria lower the organic load contained in the water, metabolizing the carbon contained in the organic pollutant compounds dissolved and/or suspended in the waste water, and producing carbon dioxide, water and biomass.

In particular, in the aerobic reactor, there is also the insufflation of compressed air so as to increase the quantity of oxygen dissolved in the water, necessary for the metabolism of the aforesaid bacteria. The biomass produced by the bacteria is then sedimented and separated from the rest of the purified waste water.

In addition, several aerobic plants comprise an additional section, downstream of the third section, in which a further chemical treatment of the purified waste water is provided for, for example with disinfectant agents.

Otherwise, the anaerobic plants comprise at least one anaerobic digestion section. More in detail, by anaerobic digestion it is intended a process of degradation of at least one organic compound by microorganisms in anaerobic conditions. Such anaerobic digestion section comprises an anaerobic digester, which contains anaerobic bacteria, acting on the content of the waste water in order to transform the latter into biogas, comprising at least carbon dioxide and methane, and a substantially liquid digestate. The most common anaerobic digesters operate continuously and are provided with stirring means (hydraulic and/or mechanical) adapted to mix a mass to be treated, whose quantity is maintained nearly constant. In other words, the entering massive flow of mass to be treated is equal to the exiting massive flow of the products, i.e. biogas and digestate.

Finally, the anaerobic plants comprise a generator of electrical energy, which produces electrical energy by means of the combustion of the methane contained in the biogas.

The plants for treating waste water of known type described up to now have in practice shown that they do not lack drawbacks.

A first drawback is given by the fact that the plants for treating waste water are highly bulky. In particular, the aerobic digester alone in the aerobic plants requires a volume of about 500 cubic meters.

A further drawback is given by the fact that the plants for treating waste water contribute to the environmental pollution since they provide for the introduction of greenhouse gas into the atmosphere, in particular carbon dioxide.

Indeed, the carbon dioxide produced by the aerobic bacteria, following the generation of biogas and from the combustion of the methane contained in the biogas, is generally freed without control into the atmosphere, without the possibility of being recovered.

A further drawback is given by the fact that the plants for treating waste water of known type provide for high retention times for the waste water to be treated, in particular in the biological treatment section of the waste water, both in the case of anaerobic digestion, and in the case of treatment with aerobic bacteria. A further drawback is given by the fact that the plants for treating waste water are wasteful from an energy standpoint. Indeed the aforesaid plants generally operate with high flows of compressed air in order to mix the waste water, requiring a high quantity of electrical energy in order to feed the compressors.

A further drawback is given by the fact that the plants for treating waste water require a considerable quantity of chemical agents in order to ensure the elimination of most of the organic load present in the waters to be treated.

A further drawback is given by the fact that the plants and the methods for treating waste water are only suitable for treating one type of waste water, in particular based on the organic load contained in the waste water itself.

### Presentation of the invention

In this situation, the problem underlying the present invention is therefore that of overcoming the drawbacks manifested by the above-described solutions of known type by providing a method and a plant for purifying waste water, which are capable of minimizing the spaces occupied on the ground and the emissions of carbon dioxide, nitric compounds and phosphorus with respect to the methods and the plants of known type.

Another object of the present invention is to provide a method and a plant for treating waste water, which allow reducing the treatment times necessary for eliminating at least one organic pollutant compound by the aforesaid waste water.

Another object of the present invention is to provide a plant for treating waste water, which is capable of being self-sufficient from the energy standpoint.

Another object of the present invention is to provide a plant for treating waste water, which is versatile, i.e. able to treat waste water independent of the concentration of organic pollutant compounds contained therein.

Another object of the present invention is to provide a plant for treating waste water, which allows achieving savings on chemical reagents with respect to the waste water treatment plants of known type.

Another object of the present invention is to provide a plant for treating waste water, which is capable of reducing the pollutants present in the water to be treated in a manner such to not require further treatments downstream of the plant itself.

### Brief description of the drawings

The technical characteristics of the invention, according to the aforesaid objects, can be clearly found in the contents of the below-reported claims and the advantages thereof will be more evident in the following detailed description, made with reference to the enclosed drawings, which represent a merely exemplifying and non-limiting embodiment of the invention, in which:
- Figure 1 shows a schematic representation of the method for purifying waste water according to a preferred embodiment of the present invention;
- Figure 2 shows a schematic representation of the plant for purifying waste water according to a preferred embodiment of the present invention.

### Detailed description of a preferred embodiment

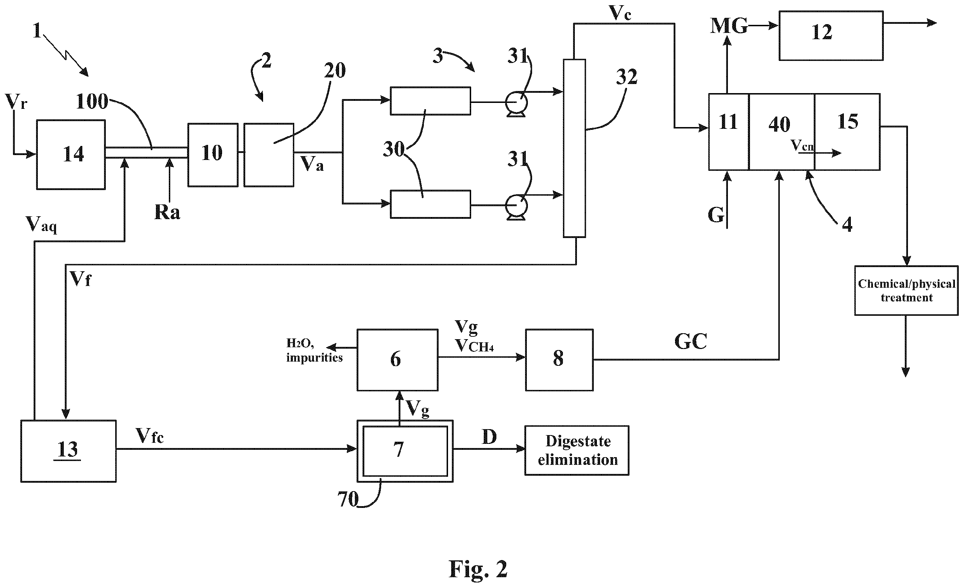

With reference to the enclosed drawings, in particular to figure 2, reference number 1 indicates the plant for treating waste water, object of the present invention, which is advantageously intended to operate according to a method for treating waste water described hereinbelow.

The plant 1 according to the present invention is intended to be employed in sites for treating and purifying waste water of various type, in particular waste water deriving from city sewers. Alternatively, the plant 1 described hereinbelow can be employed also for treating waste water of different type and origin, e.g. deriving from the processes of animal hides, foods or cellulose.

Hereinbelow, with the term waste water, an aqueous suspension will be intended with suspended solid content lower than 50000 mg/l, preferably lower than 20000 mg/l.

The plant 1 can advantageously operate according to an intermittent process (i.e. a process of batch type, with pre-established volumes of waste water, non-continuously treated) and/or according to a continuous process (i.e. with a continuous current of entering waste water) and/or according to a mixed process. Preferably, the plant 1 operates according to a continuous process.

According to the idea underlying the present invention, the plant 1 for treating waste water comprises a flow piping 100 arranged for receiving and conveying waste water Vr to be treated, and such waste water Vr comprises at least one organic pollutant compound C. Advantageously, the organic pollutant compound C comprises at least one from among: a carbohydrate, a protein, a lipid, a surfactant, a dye, a biological material.

In particular, if the plant 1 treats city waste water, by flow piping 100 it can be intended the terminal portion of the sewage network that conveys the waste water, in the jargon termed "black waters", to the purifier, which in such case is substituted by the plant 1, object of the invention.

Advantageously, the plant 1 is provided with a pretreatment unit 14, which is placed upstream of the flow piping 100 and comprises at least one device selected from among: a filtration grid, a desander, a grease trap.

In particular, the arrangement of a pretreatment unit allows removing rough material such as pieces of wood, paper, plastic, for example by means of a plurality of filtration grids placed in series, having progressively decreasing mesh size. Advantageously, the removed rough material is intended to be washed, compacted and disposed of in another manner.

Advantageously, in addition, the arrangement of a grease trap allows separating oils, in particular food oils, which can be sent to a thickening unit 13, described more in detail hereinbelow.

In addition, the arrangement of a desander in the pretreatment unit 14 advantageously allows removing most of the inorganic load present in the waste water Vr, e.g. particulate of suspended insoluble minerals, whose average diameter is greater than or equal to 0.15-0.20 mm and provided with a high specific weight.

In particular, the removed inorganic load is intended to be washed in another manner.

Advantageously, the grease traps and desanders are advantageously of type known to the man skilled in the art and therefore they will not be described more in detail hereinbelow.

Of course, without departing from the protective scope of the invention, the grease trap and the desander, if present, can also be made of a single operating unit.

Advantageously, the plant 1 comprises a first tank 10, placed downstream of the flow piping 100, for receiving and storing the waste water Vr to be treated.

Such first tank 10 is advantageously employed as a storage tank in the event in which the plant 1 provides for treating waste water Vr continuously, allowing providing for possible interruptions of the running of waste water Vr from the flow piping 100 towards the first tank 10 for a time equal to the ratio between the volume of the first tank 10 and the flow of waste water Vr exiting therefrom.

Of course, if the plant 1 provides for treating the waste water Vr according to a discontinuous process, organized for example according to fixed treatment volumes, the volume of waste water Vr in the first tank 10 is substantially equal to the total treated volume in the entire process.

The plant 1 also comprises metering means for metering an alkaline reagent Ra into the waste water Vr coming from the flow piping 100 and obtaining alkaline waste water Va.

Preferably, as will be better illustrated in the method described hereinbelow, the alkaline reagent Ra is a strong base selected from among sodium hydroxide, potassium hydroxide, lithium hydroxide and their mixtures or compounds. More preferably the alkaline reagent Ra is selected from among sodium hydroxide, potassium hydroxide and their mixtures or compounds. Still more preferably, the alkaline reagent Ra is sodium hydroxide.

In particular, the metering means for metering the alkaline reagent Ra are placed at the flow piping 100 and/or at the first tank 10.

In particular, the metering means are susceptible of adding, in multiple introduction points, the alkaline reagent Ra along the flow piping 100 in order to allow a more effective mixing of the same alkaline reagent Ra within the waste water Vr in the flow piping 100.

Advantageously in addition, the flow piping 100 at its interior comprises one or more static stirrers.

As will be better illustrated more in detail hereinbelow, the alkaline reagent Ra is intended to react with the organic pollutant compound C in order to hydrolyze the molecules of the latter and transform them into modified molecules M, in particular hydrolyzed or denatured.

Advantageously, the plant 1 comprises at least one first pH sensor, placed to intercept the flow piping 100 and/or at the first tank 10 and configured for detecting a pH value of the alkaline waste water Va and generate a corresponding pH signal. For example, the first pH sensor is an electronic pH meter of industrial type.

In addition, the plant 1 advantageously comprises a logic control unit, in data communication at least with the first pH sensor and configured for receiving the pH signal and commanding the metering means to meter the alkaline reagent Ra based on the pH signal received by the first pH sensor.

More in detail, the logic control unit is provided with a memory unit configured for containing an objective pH value, is configured for receiving from the pH sensor the pH signal representative of the pH of the alkaline waste water Va and for comparing the objective value with the pH value measured by the aforesaid sensor.

Advantageously, the logic control unit is also configured for commanding the metering means to dispense further alkaline reagent Ra when the pH value measured by the first pH sensor is lower than the objective pH value.

Advantageously, the plant 1 is provided with multiple first pH sensors, immersed within the flow piping 100 at the points of introduction of the alkaline reagent Ra, in a manner such to be able to progressively adjust the introduction of the alkaline reagent Ra depending on the type of waste water to be treated.

In addition, the plant 1 is provided with a maturation unit 2 in fluid communication with the flow piping 100, and in which alkaline waste water Va is susceptible of being introduced.

In particular, the maturation unit 2 comprises at least one second tank 20 in fluid communication with the flow piping 100 and preferably with the first tank 10.

Advantageously, the plant 1 comprises means for transferring the alkaline waste water Va from the flow piping 100 (or from the first tank 10) to the second tank 20, such as for example one or more centrifuge pumps.

In operation, the alkaline waste water Va, which advantageously starts to react within the flow piping 100 (or in the first tank 10), is preferably retained in the second tank 20 for a maturation time tm sufficient for completing the reaction, during which the hydrolyzed molecules M are intended to coagulate in order to form a flocculation F and obtain mature waste water Vm.

Advantageously, the plant 1 comprises further metering means for metering a polyelectrolyte P in the second tank 20 in order to accelerate the formation of the flocculation F.

Of course, without departing from the protective scope of the present invention, the metering of the polyelectrolyte P can occur together with the addition of the alkaline reagent Ra, for example within the flow piping 100 and/or of the first tank 10.

Advantageously, the maturation unit 2 comprises stirring means 21, for example a mechanical stirrer placed within the second tank 20 and provided with an impeller, so as to facilitate the contact between the modified molecules M (and possibly between the modified molecules M and the polyelectrolyte P) and form the flocculation F.

In addition, the plant comprises a separation unit 3 in fluid communication with the maturation unit 2 and arranged for separating mature waste water Vm coming from the maturation unit 2 into at least clarified waters Vc and sludge Vf.

Advantageously, the separation unit 3 comprises a clarifier 30 and/or separation means 32, which are preferably selected from among: a separation column, a tangential filter, an ultrafiltering membrane, a centrifuge. The latter separation means 32 are known to the man skilled in the art of the field and therefore they will not be described in detail hereinbelow. Preferably, the separation unit 3 comprises both the clarifier 30 and the separation means 32.

More in detail, the clarifier 30 comprises a substantially cylindrical tank provided with a conical bottom, and a calming tube, placed within the first tank and concentric with the latter. In addition, the tank and the calming tube are connected on the lower part by means of an opening made below the calming tube itself. In operation, the mature waste water Vm is preferably introduced tangentially within the calming tube, and by following a spiral path along the internal wall of the latter, first fills the calming tube itself, and then exits from the opening of the latter and fills the tank. With this movement, the mature waste water Vm are divided into clarified waters Vc, which can be extracted from the top of the tank and sludge Vf, which sediments on the bottom of the calming tube.

Advantageously, the sludge Vf is extracted from the bottom of the calming tube and sent by means of a centrifugal pump 31 to the separation means 32, e.g. a separation column, which allows further separating by gravity the sludge Vf comprising the flocculation F, concentrating on the bottom of the column most of the latter. Preferably, the volume of the sludge Vf is comprised between 2 and 5% of the total volume of mature waste water Vm contained within the separation column.

Of course, without departing from the protective scope of the invention, the maturation unit 2 and the separation unit 3 can also be attained as a single unit. For example, the alkaline waste water Va can carry out or complete the maturation while they are within the separation unit 3 in order to sediment.

In addition, the plant 1 comprises a thickening unit 13, in fluid communication with the separation unit 3, and such thickening unit 13 is arranged for separating at least part of the sludge Vf coming from the separation unit 3 into an alkaline recovery liquid Vaq and concentrated sludge Vfc. In particular, the recovery liquid Vaq comprises water and at least one fraction of alkaline reagent Ra that did not react in the maturation section 2.

Preferably, the recovery liquid Vaq comprises a percentage of liquid (mainly water) comprised between 60 and 70% by volume with respect to the total volume of the liquid content of the sludge Vf, and the concentrated sludge Vfc preferably comprise a percentage of liquid comprised between 30 and 40% by volume with respect to the total volume of the liquid content of the sludge Vf.

Preferably, the recovery liquid Vaq also comprises a percentage of flocculation F comprised between 1 and 5% by volume with respect to the total volume of the solid content of the sludge Vf, and the concentrated sludge Vfc preferably comprise a percentage of flocculation F comprised between 95 and 99% by volume with respect to the total volume of the solid content of the sludge Vf.

Advantageously, the thickening unit 13 comprises at least one dynamic thickener by gravity and/or at least one mechanical thickener selected from among: a decanter, a rotary dynamic thickener, a flat table, a centrifuge.

Advantageously, in addition, the thickening unit 13 comprises a screw pump in order to extract the sludge Vf from the clarifier 30 and/or from the separation means 32 and convey it into the thickener.

In addition, advantageously, the thickening unit 13 is in fluid communication with the flow piping 100 in order to introduce the recovery liquid Vaq into the flow piping 100.

For such purpose, the plant 1 advantageously comprises one or more recirculation pumps, which are arranged for conveying the recovery liquid Vaq to the flow piping 100, in a manner such to recover the non-reacted alkaline reagent Ra still contained in the recovery liquid Vaq.

Of course, without departing from the protective scope of the present invention, the recovery liquid Vaq can also be directly conveyed into the first tank 10, if present.

Preferably, the ratio between the flow of recirculated recovery liquid Vaq and the flow of waste water Vr conveyed into the flow piping 100 is comprised between 0.01 and 0.05.

In this manner one obtain a plant 1 which allows achieving savings on chemical reagents with respect to the waste water treatment plants of known type.

In addition, the volume of the flocculation F produced is advantageously lower than the plants of known type and therefore requires lower disposal capacity for such flocculation, i.e. for example for an anaerobic digester 7 (described more in detail hereinbelow) of smaller size, advantageously reducing the overall bulk of the plant 1.

Advantageously, the plant 1 comprises a neutralization unit 4 in fluid communication with the separation unit 3 and arranged for respectively neutralizing the clarified waters Vc in order to obtain neutral clarified waters Vcn.

Advantageously, the neutralization unit 4 comprises a third tank 40, intended to receive the clarified waters Vc from the clarifier 30 and/or from the separation means 32.

Advantageously in addition, the neutralization unit 4 comprises metering means (not shown in the enclosed figures) in order to introduce a measured quantity of a first acidic reagent Rac1 into the third tank 40.

Advantageously, as explained more in detail hereinbelow, the first acidic reagent Rac1 is intended to react with residues of alkaline reagent Ra and with basic modified molecules M separated in water in order to lower the overall pH of the clarified waters Vc.

Advantageously, the logic control unit of the plant 1 is configured for actuating the metering means in order to introduce a measured quantity of the first acidic reagent Rac1 into the third tank 40.

More in detail, the neutralization unit 4 comprises a second pH sensor in data communication with the logic control unit, arranged for measuring the pH of the clarified waters Vc and sending a signal to the logic control unit representative of the detected pH. In addition, the memory unit of the logic control unit is configured for advantageously containing a threshold value of pH. Advantageously, the logic control unit is configured for comparing the signal coming from the second pH sensor and actuating the metering means in order to introduce a metered quantity into the third tank 40 respectively of the first acidic reagent Rac1 based on the comparison of the aforesaid signal with the threshold value.

Advantageously, the plant 1 comprises at least one anaerobic digester 7 placed downstream of the separation unit 3 and arranged for treating the sludge Vf and/or the concentrated sludge Vfc respectively coming from the separation unit 3 and/or from the thickening unit 13 in order to generate biogas Vg and a digestate D.

In particular, the biogas Vg comprises a methane fraction V_{CH4} and at least one first fraction of carbon dioxide V₁, _{CO2}.

Preferably, all the sludge Vf is intended to be treated in the thickening unit 13 and therefore the anaerobic digester 7 is preferably placed downstream also of such thickening unit 13 in order to treat the concentrated sludge Vfc.

Advantageously, as explained more in detail hereinbelow, the anaerobic digester 7 at its interior contains anaerobic bacteria of different type depending on the reaction type that the latter promote.

More in detail, the aforesaid anaerobic bacteria are selected, depending on the temperatures at which they operate, from among: mesophilic bacteria, which advantageously work at a temperature comprised preferably between 35°C and 45°C, and thermophilic bacteria, which advantageously work at a temperature preferably comprised between 65°C and 75°C.

Advantageously, the anaerobic digester 7 comprises a reactor 70 within which the anaerobic bacteria and the sludge Vf and/or the concentrated sludge Vfc to be metabolized are intended to be placed. In addition, the anaerobic digester 7 advantageously comprises an external heating jacket, which is placed perimetrically around the external walls of the reactor 70 in order to maintain the internal temperature of the latter comprised in the operating interval of the above-described bacteria.

Advantageously, if the degree of alkalinity of the sludge Vf and/or of the concentrated sludge Vfc should be such to compromise the activity of the bacteria within the reactor 70, the plant 1 is provided with an adjustment unit 5, placed upstream of the anaerobic digester 7, arranged for adjusting the pH of the sludge Vf and/or of the concentrated sludge Vfc. In particular, the adjustment unit 5 comprises a fourth tank 50, which is in fluid communication respectively with the separation unit 3 and/or with the thickening unit 13 and is arranged for receiving the sludge Vf and/or the concentrated sludge Vfc, and metering means, arranged for introducing, in the fourth tank 50, a second acidic reagent Rac2 such to lower the pH of the concentrated sludge Vfc up to reaching a preset pH value, preferably comprised between 7.5 and 8.5.

In particular, it is sufficient to bring the sludge Vf and/or the concentrated sludge Vfc to values of pH that are slightly alkaline since the first fraction of carbon dioxide V_{1,CO2} present in the biogas Vg produced in the anaerobic digester 7, together with other acid compounds present in the reactor 70, has a buffer effect on the sludge Vf and/or on the concentrated sludge Vfc.

Advantageously, the metering means of the adjustment unit 5 are connected to the logic control unit of the plant 1 and are actuated according to the same logic described for the metering means of the neutralization unit 4.

As an alternative to the anaerobic digestion, the sludge Vf and/or the concentrated sludge Vfc can be disposed of in another manner or intended for other processing. For example, the sludge Vf and/or the concentrated sludge Vfc can be employed in order to produce defecation lime, or corrective agents for cultivated terrain.

Advantageously, the plant 1 comprises a cogenerator 8 arranged for generating at least electrical energy and a combustion gas GC comprising at least one second fraction of carbon dioxide V_{2,CO2} and a water vapor fraction V_{H2O,v} starting from the biogas Vg coming from the anaerobic digester 7.

Preferably, the combustion of the methane fraction V_{CH4} occurs by mixing the latter with air, with an air/methane ratio greater than 10:1, and preferably about 15:1, so as to ensure an optimal combustion with sufficient oxygen supply in the combustion chamber of the cogenerator 8 and therefore prevent the formation of carbon monoxide (CO). Therefore, the combustion gas GC advantageously also comprises a fraction of air Vₐᵢᵣ. Preferably, the ratio between air and carbon dioxide in the combustion gas GC is about 15:1.

Advantageously, the electrical energy developed by the cogenerator 8 is used for feeding one or more of the equipment of the units of the plant 1, such as for example pumps, compressors, sensors, stirring means, logic control unit and other components functioning by means of electrical energy or other equipment close to the plant 1 itself.

In this manner one obtains a plant 1 capable of meeting one's energy needs.

Advantageously, the plant 1 is sized so as to be at least energetically self-sustained and is provided with an equivalent inhabitant potential AE greater than 6000.

Hereinbelow, the AE unit (equivalent inhabitant) is intended as corresponding to a chemical oxygen request (COD) required by the degradation of the chemical compounds present in the waste water equal to 130 g of O₂ per day, or to a load volume of waste water to be processed equal to 200 1 per day.

In other words, the plant 1 is sized to process a quantity of organic compound C equal to or greater than 1200 m³ per day. Indeed, it was surprisingly discovered that for such volumetric flows, the volume of sludge Vf and consequently of biogas Vg produced is sufficient for feeding the cogenerator 8 and producing sufficient energy for self-sustaining the plant 1 without having to use fossil fuels. Of course, such flow value is to be intended as referred to waste water of city origin, without accounting for particular territory conditions and/or the presence of industrial waste that flowed into the aforesaid waste water of city origin.

Of course, the cogenerator 8 can be advantageously assisted by one or more diesel motors during the starting or the maintenance of the plant 1, i.e. in steps in which the biogas Vg is not yet sufficient to generate energy for the entire plant 1.

Preferably, the cogenerator 8 is in fluid connection with the neutralization unit 4 and/or with the adjustment unit 5 (if present) in order to introduce therein at least the second fraction of carbon dioxide V_{2,CO2} contained in the combustion gas GC, and preferably the entire combustion gas GC.

In such case, the first acidic reagent Rac1 and/or the second acidic reagent Rac2 advantageously comprise the second fraction of carbon dioxide V_{2,CO2}.

In this manner such second fraction of carbon dioxide V_{2,CO2} is recovered and is not introduced into the atmosphere, contributing to lowering the environmental impact of the plant 1.

At the same time, by introducing the combustion gas GC into the neutralization unit 4, not only is carbon dioxide removed from the latter, but also other impurities are removed, which remain in the neutral clarified waters Vcn and/or in the sludge and are easily separatable in subsequent units of the plant 1.

As an alternative to or in combination with such aspect, in particular in the event in which the second fraction of carbon dioxide V_{2,CO2} is not produced in quantities sufficient for the neutralization, the plant 1 comprises an auxiliary tank, in fluid communication with the neutralization unit 4 and/or the adjustment unit 5 and intended to contain a first or second acidic reagent Rac1, Rac2 different from carbon dioxide, in particular a strong acid, e.g. hydrochloric acid. In addition, the plant 1 advantageously comprises auxiliary metering means arranged for conveying the strong acid to at least one of the aforesaid units.

In accordance with the preferred embodiment, the plant 1 can comprise a purification unit 6 arranged upstream of the cogenerator 8, in order to remove impurities from the biogas Vg, such as for example water vapor, hydrogen sulfide, ammonia, etc.

Advantageously, the purification unit 6 is configured for treating the biogas Vg by placing it in contact with at least part of the clarified waters Vc. For such purpose, the purification unit 6 is hydraulically connected with the separation unit 3 in order to receive at least part of the aforesaid clarified waters Vc. In addition, the purification unit 6 is advantageously connected to the neutralization unit 4 in order to continue the treatment of the clarified waters Vc used in the purification.

In particular, in accordance with a first embodiment, the purification unit 6 comprises a gurgling tank arranged for containing the clarified waters Vc and provided with holes on the bottom in order to allow the gurgling of the biogas Vg.

In accordance with a second embodiment, the purification unit 6 comprises a washing tower, or a scrubber, arranged for nebulizing the clarified waters Vc and to make the latter flow together with the biogas Vg in counter-current. More in detail, in operation, the biogas Vg is introduced into the lower part of the washing tower and is washed in counter-current, at low speed, over a wide contact surface.

In these two modes, it was surprisingly discovered that the biogas Vg is cleaned in a simple, inexpensive and effective manner.

As an alternative to the first and to the second embodiment set forth above (not illustrated in the enclosed figures), the purification unit 6 might not use the clarified waters Vc for purifying the biogas Vg. In accordance with such alternative, the purification unit 6 for example comprises a condensation column for removing the water vapor contained in the biogas Vg, an acidic washing column for removing at least the ammonia and a basic washing column for removing possibly the hydrogen sulfide and other acid compounds contained in the biogas Vg.

In this manner, one prevents the formation of pollutant compounds within the cogenerator 8, which could damage the apparatuses of the latter.

In accordance with the preferred embodiment, the plant 1 comprises a stripping unit 11 placed upstream of the neutralization unit 4 and arranged for treating the clarified waters Vc. In particular, the stripping unit 11 is provided with insufflation means, in order to insufflate a gaseous stream G into the clarified waters Vc and in order to extract at least one ammonia fraction from the clarified waters Vc, preferably all of the dissolved ammonia, obtaining a gaseous mixture MG comprising at least the ammonia fraction. Preferably, the gaseous stream G is air; however, without departing from the protective scope, the gaseous stream G can be constituted by any gas capable of executing a stripping of the ammonia from the clarified waters Vc.

Advantageously, the plant 1 also comprises a washing unit 12 of the gaseous mixture MG, which is in fluid communication with the stripping unit 11 and is arranged for removing the ammonia fraction from the gaseous mixture MG by means of reaction with an acidic aqueous solution, e.g. an aqueous solution of sulfuric acid or diluted nitric acid, so as to respectively obtain ammonium sulfate and ammonium nitrate.

In this manner, it is possible to reduce the treatment times of the waste water Vr, preventing the transformation of the ammonia into nitrites and/or nitrates and then molecular nitrogen so to be able to free the latter into the atmosphere without consequent environmental damage. In addition, the salts recovered can be employed as fertilizers.

In addition, the plant 1 comprises, advantageously, an aerobic reactor 15 placed downstream of the neutralization unit 4 and arranged in order to reduce the concentration of residues of organic pollutant compound C in the neutral clarified waters Vcn, by means of aerobic bacteria.

Preferably, the stripping unit 11, the neutralization unit 4, and the aerobic reactor 15 are attained by means of a single treatment tank, in particular divided into at least three sections.

In particular, the stripping unit 11 is placed in a first section, at the inlet of the treatment tank, is closed on the upper part and is placed under reduced pressure, in order to prevent the extracted gaseous mixture MG from being released into the atmosphere. Advantageously, the stripping unit 11 is placed upstream of the neutralization unit 4 since the ammonia is in particular not very soluble in an alkaline solution and therefore is more easily removable.

Preferably, the stripping unit 11 occupies a volume of the treatment tank such to allow an average stay time of the of the alkaline clarified waters Vc equal to about 2 hours.

Advantageously, in a second section of the treatment tank, the neutralization unit 4 is placed, which is in fluid communication with the stripping unit 11 in order to receive the clarified waters Vc from which the ammonia fraction was extracted, and the aerobic reactor 15 is placed in a third section of the treatment tank.

In this manner, it is possible to reuse the pre-existing treatment plants of known type, by reusing and partitioning the original aerobic reactor, which would result oversized with respect to the organic load to be treated. Indeed, in the plant 1, object of the present invention, the organic compound C to be removed is moved mainly upstream of the aerobic reactor 15, in particular in the flow piping 100 and in the maturation unit 2, being mainly concentrated in the sludge Vf.

Advantageously, in addition, the plant 1 comprises a section of chemical-physical treatment, preferably placed downstream of the aerobic reactor 15, preferably so as to remove the aerobic bacteria from the neutral clarified waters Vcn and possible inorganic pollutant compounds which must be eliminated in order to allow the reuse of the neutral clarified waters Vcn in equipment of plants, for example in cooling towers, or their discharge into the outside environment.

In particular, the chemical-physical treatment section is provided with at least one from among: an ultraviolet lamp, an ozone generator, a tangential filter, an ultrafiltering membrane.

In accordance with the embodiment described up to now, the plant 1 for treating waste water has a single purification line. More in detail, with the expression "purification line" it is intended a series of single treatment units placed in succession and adapted to execute the different operations of treatment and purification of the waste water Vr in series.

Of course, multiple embodiment variants are possible, according to which the plant 1 comprises a processing line with several treatment units duplicated and operating in parallel (e.g. two clarification units 3, as depicted in figure 2), i.e. alternatively multiple entire processing lines parallel to each other. Advantageously, the arrangement of treatment units in parallel allows increasing the operating flexibility of the plant 1, in particular preventing entirely stopping the latter in the event in which maintenance is necessary of only one of the treatment units, or being able to process different flows of waste water Vr to be treated in corresponding different periods of the year, selectively activating one or more treatment units.

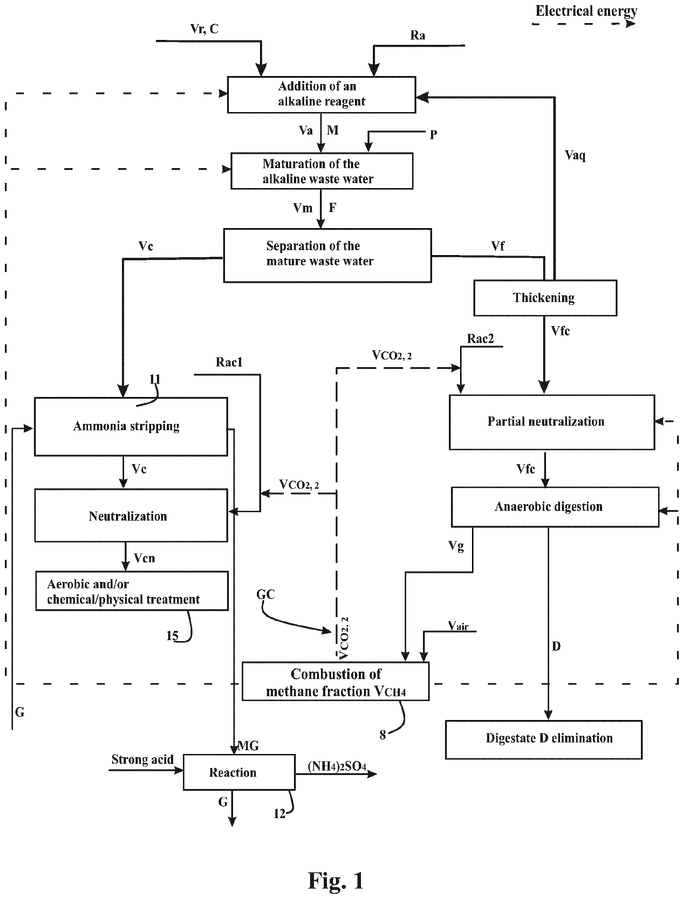

Also constituting the object of the invention is a method for treating waste water, a preferred embodiment thereof being schematically illustrated in figure 1, which preferably employs the previously described plant 1, regarding which the reference numbers will be maintained for descriptive simplicity. Of course, without departing from the protective scope of the present invention, such method can employ any other plant for treating waste water that is adapted for such purpose.

According to the idea underlying the present invention, the method comprises a step of providing waste water Vr to be treated, in which the waste water Vr comprises at least one organic pollutant compound C. In accordance with a first example of waste water Vr, the latter is city waste water, i.e. water used in human, domestic, industrial or farming activities, which for this reason contains organic and inorganic substances. Such waste water Vr for example contain proteins, carbohydrates, cellulose, and mixtures of chemical compounds such as for example surfactants. Table 1 reports a typical characterization of the first example of waste water Vr.

**Table 1 - Typical characterization of city waste water**

| **Parameters** | **Measurement unit** | **Values** |
|---|---|---|
| pH | | 6.0 - 8.5 |
| COD | mg/l | 250 - 800 |
| Total Nitrogen (N) | mg/l | 20 - 80 |
| Ammonia Nitrogen (N) | mg/l | 15 - 60 |
| Total Phosphorous (P) | mg/l | 3 - 10 |
| Organic substance (with organic compounds such as uric acid, urea, amino acids, fatty acids, alcohols, etc.) | % of the dry matter (dm) | 31 |
| Fibrous Proteins (collagen) | % of the organic substance (os) | 34 |
| Lipids | % os | 10 |
| Carbohydrates | % os | 10 |
| Cellulose | % os | 40 |
| Mineral salts (Ca, Na, Mg, PO_{Tot.}) | % dm | 5 |
| Metals (Fe, Zn, Cu, etc.) | % dm | < 0.5 |

In accordance with a second example of waste water Vr, the latter is waste water from the textile industry and contain for example cellulose, starch, surfactants, mineral charges, inerts. The composition of such waste water Vr can vary in relation to the characteristics of the raw materials and of production processes. Table 2 reports a typical characterization of the second example of waste water Vr.

**Table 2 - Typical characterization of waste water from the textile industry**

| **Parameters** | **Measurement unit** | **Values** |
|---|---|---|
| pH | | 6.5 - 10 |
| COD | mg/l | 250 - 900 |
| Total Nitrogen (N) | mg/l | 20 - 40 |
| Ammonia Nitrogen (N) | mg/l | <15 |
| Total Phosphorous (P) | mg/l | 10 - 30 |
| Organic compounds (dyes, desizing, softeners, surfactants) | % dm | 45 |
| Inorganic compounds (soda, hypochlorite, various acids, salt) | % dm | Variable from 15 to 30 if present |
| Keratin (animal fibers) | | |
| Cellulose (plant fibers) | | |
| Synthesis fibers (acrylic, polyester, etc.) | | |
| Ash | % dm | 13 |
| Mineral salts (Ca, Na, K, Mg, PO_{Tot.}) | % dm | 12 |
| Metals (Fe, Zn, Cu, etc.) | % dm | < 0.5 |

In accordance with a third example of waste water Vr, the latter is waste water from the paper industry and contain for example cellulose, starch, surfactants, mineral charges, inerts. The composition of such waste water Vr can vary in relation to the characteristics of the raw materials and of production processes. Table 3 reports a typical characterization of the third example of waste water Vr.

**Table 3 - Typical characterization of waste water from the paper industry**

| **Parameters** | **Measurement** | **Values** |
|---|---|---|
| | **unit** | |
| pH | | 6.2 - 8.5 |
| COD | mg/l | 1500 - 3000 |
| Total Nitrogen (N) | mg/l | 50 - 150 |
| Total Phosphorous (P) | mg/l | 15 - 25 |
| Organic substance (cellulose derivatives, charges and fillers, resins and various additives, etc.) | % dm | 15 |
| Cellulose | % dm | 60 |
| Ash | % dm | 10 |
| Mineral salts (Ca, Na, Mg, PO_{Tot.}) | % dm | 15 |
| Metals (Fe, Zn, Cu, etc.) | % dm | <0.1 |

In accordance with a fourth example of waste water Vr, the latter is waste water from the butcher industry and contains organic compounds such as for example uric acid, urea, amino acids, fatty acids, alcohols, etc. The composition of such waste water Vr varies as a function of the type and number of animals slaughtered and by the presence of complementary processing operations in the structure. Table 4 reports a typical characterization of the fourth example of waste water Vr.

**Table 4 - Typical characterization of waste water from the butcher industry**

| **Parameters** | **Measurement unit** | **Values** |
|---|---|---|
| pH | | 4.2 - 8.5 |
| COD | mg/l | 4000 - 12000 |
| Total Nitrogen (N) | mg/l | 150 - 450 |
| Ammonia Nitrogen (N) | mg/l | < 50 |
| Total Phosphorous (P) | mg/l | 25 - 50 |
| Proteins | % dm | 70 |
| Lipids | % dm | 15 |
| Carbohydrates | % dm | 10 |
| Mineral salts (Ca, Na, Mg, PO_{Tot.}) | % dm | 5 |
| Metals (Fe, Zn, Cu, etc.) | % dm | < 0.5 |

In accordance with a fifth example of waste water Vr, the latter is waste water from the dairy industry. Table 5 reports a typical characterization of the fifth example of waste water Vr.

**Table 5 - Typical characterization of waste water from the dairy industry**

| **Parameters** | **Measurement unit** | **Values** |
|---|---|---|
| pH | | 5.5 - 7.5 |
| COD | mg/l | 1250 - 3000 |
| Total Nitrogen (N) | mg/l | 50 - 200 |
| Ammonia Nitrogen (N) | mg/l | < 15 |
| Total Phosphorous (P) | mg/l | 10 - 25 |
| Proteins | % dm | 8 - 14 |
| Lipids | % dm | 17 |
| Carbohydrates | % dm | 50-70 |
| Mineral salts (Ca, Na, Mg, PO_{Tot.}) | % dm | 6 - 8 |

In accordance with a sixth example of waste water Vr, the latter is waste water from the tanning industry and for example contains surfactants, mineral charges, inerts. The composition can vary in relation to the characteristics of the raw materials and of production processes. Table 6 reports a typical characterization of the sixth example of waste water Vr.

**Table 6 - Typical characterization of waste water from the tanning industry**

| **Parameters** | **Measurement unit** | **Values** |
|---|---|---|
| pH | | 5.5 - 10.0 |
| COD | mg/l | 6000 - 12000 |
| Total Nitrogen (N) | mg/l | 200 - 400 |
| Ammonia Nitrogen (N) | mg/l | 100 - 200 |
| Total Phosphorous (P) | mg/l | 15 - 50 |
| Proteins | % dm | 42 |
| Lipids | % dm | 17 |
| Carbohydrates | % dm | 7 |
| Cellulose | % dm | 3 |
| Ash | % dm | 13 |
| Mineral salts (Ca, Na, Mg, PO_{Tot.}) | % dm | 15 |
| Metals (Fe, Zn, Cu etc.) | % dm | < 1 |

As is visible from the above-reported examples, the waste water Vr arranged in the present invention preferably has high organic load.

In particular, the organic pollutant compound C is any undesired organic molecule in the waste water Vr that must be treated in order to discharge it into the outside environment or reuse it within an industrial plant, from which waste water Vr itself derives.

For example, the organic pollutant compound C is a compound deriving from the food processing process, in particular from processing meat, fish, fruit or vegetables, or from the dairy industry, or from the paper processing process, or an organic dye deriving from the tanning industry.

Advantageously, the organic pollutant compound C comprises at least one from among: a carbohydrate, a protein, a lipid, a surfactant, a dye, a biological material.

For example, if it is a carbohydrate, the organic pollutant compound C is a polysaccharide, in particular a starch or cellulose.

In addition, if it is a dye (or a tincture), the organic pollutant compound C comprises an acid dye, an azo extension dye, a basic dye, a mordent dye, an oxygen dye, a pigment dye, a reactive dye, a substantive dye for cotton, a vat dye, or a sulfur dye. Such dyes are known in the field and therefore they will not be described more in detail.

Of course without departing from the protective scope of the present invention, the organic pollutant compound C can be free in the waste water Vr or also contained in any unicellular element (bacteria and/or virus) whose concentration in the waste water Vr to be treated is greater than the legal limits and is susceptible of being removed by means of a method for the treatment thereof. Therefore, in such case the organic pollutant compound C will more generally be considered a biological material.

Advantageously, the present method allows sizing the plant 1 in order to process a quantity of organic compound C equal to or greater than 6000 AE, i.e. equal to or greater than 1200 m³ per day. Indeed, it was surprisingly found that for such volumetric flows, the method allows producing for example sludge Vf from which biogas Vg is produced in a quantity such to generate sufficient energy for self-sustaining the plant 1 without having to use fossil fuels.

The method according to the invention comprises a step of addition of an alkaline reagent Ra in the waste water Vr in order to obtain alkaline waste water Va, in which the at least one organic pollutant compound C is transformed into modified molecules M due to the action of the alkaline reagent Ra. In particular, the modified molecules M are hydrolyzed and/or denatured molecules.

Advantageously the alkaline reagent Ra is a strong base selected from among: sodium hydroxide, potassium hydroxide, calcium hydroxide, barium hydroxide, lithium hydroxide, magnesium hydroxide, and their mixtures or compounds. In addition, the pH of the alkaline waste water Va is advantageously comprised between 10 and 14 and preferably is about 12.2.

Preferably, the alkaline reagent Ra is a strong base selected from among sodium hydroxide, potassium hydroxide, lithium hydroxide and their mixtures or compounds. More preferably the alkaline reagent Ra is selected from among sodium hydroxide, potassium hydroxide and their mixtures or compounds. Still more preferably, the alkaline reagent Ra is sodium hydroxide.

Indeed it was surprisingly found that the latter monovalent alkaline metal hydroxides have high solubility within the waste water Vr and do not precipitate. In particular, once dissolved in water, such types of alkaline reagent Ra are able to cause the hydrolysis of the organic pollutant compound C without forming metal salts (e.g. carbonates, as occurs with the bivalent metal compounds, i.e. calcium, magnesium or barium, and trivalents) which would precipitate, forming an inert sludge.

In addition, such alkaline reagents Ra advantageously substantially involve only alkaline denaturing and/or alkaline hydrolysis of the organic pollutant compound C and not double exchange reactions, which would require further steps for eliminating the reaction product. Therefore, the addition of an alkaline reagent Ra, specifically a hydroxide of a monovalent alkaline metal, in order to make the waste water Vr basic, advantageously allows minimizing the steps of the method and the use of lower quantities of reagents.

More in detail, in the step of addition of the alkaline reagent Ra depending on the nature of the organic pollutant compound C, the molecules constituting the latter undergo structural modifications and/or are divided into molecules of lower molecular weight.

For example, the organic pollutant compound C can react with the alkaline reagent Ra according to an alkaline hydrolysis reaction, in a manner such that in the basic environment that formed after the addition of the alkaline reagent Ra, the organic compound C is divided into multiple molecules offering a shorter chain.

An an alternative or in combination, the organic pollutant compound C can react with the alkaline reagent Ra without modifying the length of the chain thereof, but by breaking hydrogen bonds and/or saline bridges.

In accordance with a first embodiment, the organic pollutant compound C comprises proteins provided with an excess of basic amino acids (arginine, lysine, histidine) and such proteins following the addition of the alkaline reagent Ra reach their isoelectric point, i.e. a condition such that the polarization of the molecule is zero. Such condition advantageously allows the aforesaid proteins to thicken together and generate a flocculation F in a subsequent maturation step which will be described more in detail hereinbelow.

In accordance with a second embodiment, the organic pollutant compound C comprises proteins provided with an excess of amino acids and the basic environment created following the addition of the alkaline reagent Ra denatures such proteins, modifying the secondary, tertiary or quaternary structure thereof, giving rise to modified molecules M, without having to break their intramolecular bonds.

In addition, in accordance with the first and/or second embodiment in which the organic pollutant compound C comprises in general proteins, the addition of the alkaline reagent Ra advantageously causes the hydrolysis of such proteins, breaking the peptide bonds (-CO-NH-).

For example, the keto-imide bonds in the protein chains in basic environment are hydrolyzed according to the following reaction (1):

-CH₂-CO-NH-CH₂- + OH⁻ → -CH₂-CO-O⁻ + H₂N-CH₂- (1)

In addition, also terminal amide groups can be hydrolyzed, in particular in accordance with the following reaction (2):

R-CO-NH₂ + OH⁻ → R-CO-O⁻ + NH₃ (2)

In addition, if there are residues of arginine, the guanidine groups can be modified, for example in accordance with the following reaction (3):

R-(CH₂)₃-NH-C(NH)-NH₂ + H₂O + OH⁻ → R-(CH₂)₃-NH-CO-O⁻ + 2NH₃ (3)

In accordance with a third embodiment, the organic pollutant compound C comprises cellulose and/or starch and the addition of the alkaline reagent Ra causes the denaturing of the aforesaid molecules and the breakage of intramolecular bonds of the same, generating modified molecules M with short chain, in particular simple sugars. In particular, the hydrolysis deteriorates the cellulose by breaking the β-glucoside bonds.

In accordance with a fourth embodiment, the organic pollutant compound C comprises cellular material (ribosomes, cell nucleus composed of DNA) contained in a monocellular organism, for example a bacterium, present in the waste water Vr and the alkaline reagent Ra causes the breakage of the cytoplasmic membrane, making the organic pollutant compound C itself available in the alkaline waste water Va. Such organic pollutant compound C thus comprises molecules provided with weak intramolecular bonds that are susceptible of being lysed in basic environment, giving rise to the modified molecules M.

In accordance with a fourth embodiment, the organic pollutant compound C comprises lipids and the addition of the alkaline reagent Ra causes the breakage of intramolecular covalent bonds, for example in accordance with the following reaction (4):

R-COOR' + NaOH → R-COONa + R'-OH (4)

In accordance with a fifth embodiment, the organic pollutant compound C comprises dyes or tinctures and the addition of the alkaline reagent Ra, in particular obtaining a pH equal to or greater than 12, causes the hydrolyzation, i.e. the possible breakage of one or more covalent chemical bonds, of the dyes or tinctures themselves.

Optionally, the waste water Vr also comprises heavy metals, such as for example chromium, and in the step of addition of the alkaline reagent Ra the latter also reacts therewith, making them precipitate as hydroxides. Such hydroxides are advantageously taken within the flocculation F in a subsequent maturation step described hereinbelow, and thus they can easily be separated from the alkaline waste water Va.

In addition, optionally, the waste water Vr comprises phosphorous compounds, generally separated in water and therefore comprising for example the phosphate ion PO₃⁴⁻. Such ion advantageously reacts with the alkaline reagent Ra, and forms a phosphorous salt, easily separatable.

For example, with pH greater than 10, if the alkaline reagent Ra is calcium hydroxide, the phosphate ion reacts, giving rise to hydroxyapatite.

In addition, the method comprises a step of maturation of the alkaline waste water Va for a maturation time tm in which the modified molecules M coagulate in order to obtain mature waste water Vm containing at least one flocculation F of the modified molecules M.

Preferably, the maturation time tm is comprised between 3 minutes and 30 minutes. During such maturation time tm it is preferable to stir the alkaline waste water Va so as to maximize the probability of collision between the modified molecules M dispersed in the aforesaid alkaline waste water Va. In particular, the modified molecules M between them form intermolecular bonds, for example by means of polycondensation reactions, generating an insoluble flocculation F in the alkaline waste water Va.

Advantageously, the step of maturation provides for the addition of at least one polyelectrolyte P to the alkaline waste water Va in order to accelerate the formation of the flocculation F.

In particular, the polyelectrolyte P is an organic polymer, preferably a polyacrylamide or derivates thereof, and is preferably added at the start of the maturation time tm.

In addition, the method comprises a separation step, by means of a separation unit 3, for separating the mature waste water Vm at least into clarified waters Vc and sludge Vf. In particular, the sludge Vf mainly contains the flocculation F.

Of course, without departing from the protective scope of the invention, the separation step can be executed simultaneously with the maturation step.

In addition, the method comprises a step of thickening the sludge Vf, in which at least one alkaline recovery liquid Vaq is removed from the sludge Vf by means of thickening, in order to obtain concentrated sludge Vfc.

In particular, the recovery liquid Vaq comprises water and at least one fraction of alkaline reagent Ra that is unreacted.

Preferably, the recovery liquid Vaq comprises a percentage of liquid (mainly water) comprised between 60 and 70% by volume with respect to the total volume of the liquid content of the sludge Vf, and the concentrated sludge Vfc preferably comprise a percentage of liquid comprised between 30 and 40% by volume with respect to the total volume of the liquid content of the sludge Vf.

Preferably, the recovery liquid Vaq also comprises a percentage of flocculation F comprised between 1 and 5% by volume with respect to the total volume of the solid content of the sludge Vf, and the concentrated sludge Vfc preferably comprise a percentage of flocculation F comprised between 95 and 99% by volume with respect to the total volume of the solid content of the sludge Vf.

Advantageously, the method comprises a step of recirculating the recovery liquid Vaq, in which the recovery liquid Vaq is introduced into the waste water Vr.

In this manner, as set forth above, it is advantageously possible to recover most of the unreacted alkaline reagent Ra, present in the recovery liquid Vaq.

Preferably, the ratio between the flow of recirculated recovery liquid Vaq and the flow of waste water Vr is comprised between 0.01 and 0.05.

In addition, the method comprises a step of neutralization of the clarified waters Vc in which the pH of the clarified waters Vc is decreased by means of at least one first acidic reagent Rac1 in order to obtain neutral clarified waters Vcn.

Preferably, the first acidic reagent Rac1 comprises, and preferably is constituted by, carbon dioxide in order to form carbonates by means of reaction with residues of alkaline reagent Ra and basic modified molecules M.

Advantageously, the method comprises a step of digesting the sludge Vf or the concentrated sludge Vfc by means of an anaerobic digester 7 in order to produce at least one biogas Vg and a digestate D, in which the biogas Vg comprises at least one methane fraction V_{CH4} and a first fraction of carbon dioxide V_{1,CO2}.

More in detail, the digestion step provides for employing anaerobic bacteria, advantageously placed within the anaerobic digester 7 and maintained in an environment with controlled temperature and pH.

In particular, the concentrated sludge Vfc are introduced at a pH preferably comprised between 7.5 and 9 within the anaerobic digester 7, since the anaerobic bacteria present within the anaerobic digester 7 require conditions of pH that are substantially neutral or close to neutrality in order to be able to metabolize the concentrated sludge Vfc.

For such purpose, in particular if the pH of the concentrated sludge Vfc and/or of the sludge Vf arriving from the clarification unit 3 was excessively alkaline, such to compromise the bacterial activity of the methanogen bacteria, the method advantageously comprises a step of partial neutralization, in which the pH of the sludge Vf or of the concentrated sludge Vfc is decreased by means of at least one second acidic reagent Rac2. In particular, the step of partial neutralization is executed respectively following the separation step or the thickening step. For example, the second acidic reagent Rac2 is equal to the first acidic reagent Rac1. Advantageously, the second acidic reagent Rac2 is carbon dioxide.

Advantageously, the pH of the concentrated sludge Vfc and/or of the sludge Vf is lowered during the digestion step by means of reaction with at least part of the first fraction of carbon dioxide V_{1,CO2} produced in the anaerobic digester 7 and present in the biogas Vg.

Advantageously, the digestion step comprises a first stage in which the anaerobic bacteria hydrolyzes the concentrated sludge Vfc, acidifying the flocculation F contained in the latter and forming first by-products such as volatile fatty acids, ketones and alcohols. In addition, the digestion step comprises a second stage, in which the aforesaid volatile fatty acids of the first by-products are transformed by the anaerobic bacteria into second by-products such as in particular acetic acid, formic acid, carbon dioxide and molecular hydrogen. In addition, advantageously, the digestion step comprises a third stage, during which the anaerobic bacteria, starting from the second by-products, produce methane, for example starting from acetic acid or reducing the carbon dioxide produced by employing molecular hydrogen.

In order to execute all the aforesaid stages of the digestion step, it is advantageous to employ different types of anaerobic bacteria, in particular acidogenic bacteria, acetogenic bacteria and methanogenic bacteria, which advantageously intervene in the first, second and third stage of the digestion step.

Advantageously, the kinetics of the metabolization reactions of the flocculation F by the anaerobic bacteria are quicker than the kinetics of anaerobic digestion in conventional methods, since the flocculation F comprises modified molecules M, in particular hydrolyzed and/or denatured, and not the organic pollutant compound C, which in order to be metabolized would require a greater digestion time.

In this manner, one obtains a method for treating waste water Vr capable of reducing the treatment time of at least one organic pollutant compound C initially present in such waste water Vr.

Preferably, the mass of the concentrated sludge Vfc converted to biogas Vg is comprised between 40 and 60%, and the remaining percentage is transformed into digestate D.

The methane fraction V_{CH4} is preferably comprised between 50% and 70% by mass of the biogas Vg produced, and the first fraction of carbon dioxide V_{1,CO2} is preferably comprised between 30% and 50% by mass. Of course, without departing from the protective scope of the invention, other gases also can be present in the biogas Vg.

Generally, the biogas Vg comprises impurities such as for example hydrogen sulfide, which if accumulated within the anaerobic digester 7 would compromise the activity of the anaerobic bacteria or, if extracted together with the methane fraction V_{CH4} and the first fraction of carbon dioxide V_{1,CO2}, would be introduced into the atmosphere, contributing to environmental pollution.

In order to overcome this drawback, the digestion step comprises a fourth disposal stage, in which oxidative bacteria, in particular of genus *Thiobacillus* or *Sulfolobus,* oxidate the hydrogen sulfide to elementary sulfur.

Alternatively, the elimination of the hydrogen sulfide can be executed in steps following the step of anaerobic digestion and preceding the combustion of the methane fraction V_{CH4}.

Advantageously in addition, the method comprises a step of eliminating the digestate D, in which the finished digestate D, i.e. no longer capable of producing further biogas, is extracted from the anaerobic digester 7, dried and preferably sent to a disposal center or alternatively is burnt in order to produce energy useful for the energy self-sustainment of the plant 1.

Advantageously, the method also comprises a combustion step, in particular in the cogenerator 8 (comprising for example a thermal station or a diesel/gas motor), of at least the methane fraction V_{CH4} of the biogas Vg in order to produce at least electrical energy and a combustion gas GC, comprising at least one second fraction of carbon dioxide V_{2,CO2}, and, preferably, a water vapor fraction V_{H2O,}v.

Preferably, before the combustion step, the methane fraction V_{CH4} is mixed with air, with an air/methane ratio greater than 10:1, and preferably about 15:1.

Preferably, the ratio between air and carbon dioxide in the combustion gas GC is about 10:1.

Advantageously, at least the second fraction of carbon dioxide V_{2,CO2}, and preferably the combustion gas GC, is added to the clarified waters Vc as first acidic reagent Rac1 of the neutralization step in order to decrease the pH.

In addition, advantageously, the second fraction of carbon dioxide, and preferably the combustion gas GC, is added to the sludge Vf or to the concentrated sludge Vfc as second acidic reagent Rac2 of the step of partial neutralization, if provided, in order to decrease the pH.

Of course, without departing from the scope of the present invention, the second fraction of carbon dioxide V_{2,CO2} separated from the combustion gas GC can advantageously be employed for other objects (for example in the industry of production of carbonated drinks, upon suitable treatment).

Advantageously, in particular in the event in which the quantity of carbon dioxide is not sufficient for the neutralization or the partial neutralization, the steps of neutralization or partial neutralization of the method can also provide for the addition respectively of a first and/or second acidic reagent Rac1, Rac2 different from carbon dioxide, in particular a strong acid, e.g. sulfuric acid. In particular, such first and/or second acidic reagent Rac1, Rac2 different from carbon dioxide can be added in addition to the carbon dioxide itself or in substitution.

For example, in the neutralization or partial neutralization step of the method, following the addition of the second fraction of carbon dioxide V_{2,CO2}, if the pH of the neutral clarified waters Vcn and/or of the sludge Vf and/or of the concentrated sludge Vfc was still greater than a respective threshold value of pH, it is provided to add a predefined quantity of strong acid, so as to accelerate the lowering of pH.

Optionally, the method comprises a step of purification of the biogas Vg, not illustrated in figure 1, in order to remove pollutants (e.g. ammonia) from the latter. In particular, the aforesaid cleaning stage is advantageously executed before the step of combustion of the methane fraction V_{CH4} of the biogas Vg.

In this manner one prevents introducing the pollutants of the biogas Vg within the clarified waters Vc to be neutralized, or prevents burning pollutants together with the methane fraction V_{CH4}, freeing the latter into the atmosphere in the form for example of nitrogen oxides or chloride compounds (e.g. dioxins).

Advantageously, the purification step provides for the treatment of the biogas Vg through contact of at least part of the clarified waters Vc, for example by means of gurgling through the aforesaid clarified waters Vc or passage through a washing tower in counter-current with respect to the clarified waters Vc themselves. Indeed it was surprisingly found that the treatment of the biogas Vg with the clarified waters Vc allows removing the main pollutants (e.g. hydrogen sulfide, ammonia, carbon dioxide, siloxanes and volatile organic compounds) in an effective and inexpensive manner, by means of chemical absorption, i.e. via reaction of the latter with the clarified waters Vc. In addition, the clarified waters Vc used in the purification step are then advantageously treated with the above-described neutralization step.

Alternatively, the purification step can provide for the passage of the biogas Vg into a condensation column in order to remove the water vapor and a subsequent acid washing in order to remove at least the ammonia. In addition, the purification step can provide for a basic washing for possibly removing the hydrogen sulfide and other acid compounds contained in the biogas Vg.

In accordance with the preferred embodiment of the present invention, the waste water Vr, and consequently the clarified waters Vc, comprise ammonia. Therefore, advantageously, before the neutralization step, the method also comprises a step of insufflation of a gaseous stream G into the clarified waters Vc in order to extract at least one fraction of the ammonia from the clarified waters Vc, obtaining a gaseous mixture MG comprising at least the ammonia fraction, and a step of reacting the ammonia fraction in the gaseous mixture MG with an acid aqueous solution, preferably a solution of nitric acid or sulfuric acid, in order to obtain at least one ammonium salt.

In this manner it is possible to prevent the oxidation of the ammonia dissolved in water, first to nitrites and nitrates and subsequently to nitrogen, which could for example occur for example with a subsequent aerobic digestion process, and at the same time produces one or more ammonium salts, for example ammonium nitrate, employable in the fertilizer industry.

According to a preferred embodiment of the present invention, the method comprises a step of cleaning the neutral clarified waters Vcn by means of an aerobic treatment.

During such step, the neutral clarified waters Vcn are treated with aerobic bacteria, preferably in an aerobic reactor 15, and such aerobic bacteria metabolize possible residues of the organic pollutant compound C, of modified molecules M, of flocculation F and/or of possible other undesired residue compounds to be eliminated. In particular, the aerobic bacteria produce biomass, which is sedimented on the bottom of the aerobic reactor 15.

Advantageously in addition, the method comprises a step of purifying the neutral clarified waters Vcn by means of a chemical-physical treatment selected from among double exchange reaction, filtration, disinfection, sedimentation.

In particular, the chemical-physical treatment is intended to eliminate the residual pollutants and the aerobic bacteria remaining in the neutral clarified waters Vcn after the aerobic treatment, for example by means of disinfection. Such disinfection can advantageously be conducted by adding, via gurgling ozone into the neutral clarified waters Vcn, or via irradiation of such waters with ultraviolet light.

Advantageously, the addition of ozone and/or the treatment with ultraviolet light has a whitening effect, i.e. possible molecules of dyes dissolved in water are degraded by the action of the above-described chemical-physical agents.

According to an alternative embodiment of the present invention, the chemical-physical treatment is a double exchange reaction.

Such double exchange reaction occurs following the addition of one from along aluminum salt, a ferrous salt, a polyamine or lime to the neutral clarified waters Vcn.

Such chemical compounds have the power of being separated in water into ions, and such ions react with other ions already present in the water in order to give rise to insoluble compounds, which precipitate. Advantageously, such double exchange reactions allow lowering the hardness of the water, for example by means of the reaction (5) reported hereinbelow:

2 Fe(OH)_{3 (s)} + 3 Ca(HCO₃)_{2 (aq)} ↔ 3 Ca(OH)_{2 (aq)} + 2Fe(HCO₃)_{3 (s)} ↓ (5)

Of course, without departing from the protective scope of the present invention, the step of purifying the neutral clarified waters Vcn can also comprise only one between the aerobic and chemical-physical treatments.

The method and the plant 1 of the present invention advantageously allow lowering the concentration of the organic pollutant compound C below the desired limits, independent of the initial concentration of the organic pollutant compound C.

Preferably, the concentration of the organic pollutant compound C exiting from the plant 1 is lower than 160 mg/l, and still more preferably lower than 100 mg/l in COD.

Indeed, depending on the type of waste water to be treated, one will obtain more or less sludge Vf depending on the concentration of the organic pollutant compound C, and, consequently, a quantity of biogas Vg that is more or less high depending on the mass of sludge Vf produced.

The invention thus conceived therefore attains the pre-established objects.

## Claims

1. Method for treating waste water, **characterized in that** it comprises the following operating steps:
- providing waste water (Vr) to be treated, said waste water (Vr) comprising at least one organic pollutant compound (C); said organic pollutant compound (C) comprising at least one from among: a carbohydrate, a protein, a lipid, a surfactant, a dye, a biological material;
- adding an alkaline reagent (Ra) in said waste water (Vr) in order to obtain alkaline waste water (Va), said at least one organic pollutant compound (C) being transformed into modified molecules (M) due to the action of said alkaline reagent (Ra); said alkaline reagent (Ra) being a strong base selected from among sodium hydroxide, potassium hydroxide, lithium hydroxide and mixtures or compounds thereof;
- maturation of said alkaline waste water (Va) for a maturation time (tm) in which said modified molecules (M) coagulate in order to obtain mature waste water (Vm) containing at least one flocculation (F) of said modified molecules (M);
- separation, by means of a separation unit (3), of said mature waste water (Vm) at least into clarified waters (Vc) and sludge (Vf), and such sludge (Vf) mainly contain said flocculation (F);
- neutralization of said clarified waters (Vc), in which the pH of said clarified waters (Vc) is decreased by means of at least one first acidic reagent (Rac1) in order to obtain clarified neutral waters (Vcn);
- thickening of said sludge (Vf), in which at least one alkaline recovery liquid (Vaq) is removed from at least part of said sludge (Vf), by means of thickening, in order to obtain concentrated sludge (Vfc).

2. Method for treating waste water according to claim 1, **characterized in that** it comprises a step of recirculating said recovery liquid (Vaq), following said thickening step, wherein said recovery liquid (Vaq) is introduced into said waste water (Vr).

3. Method for treating waste water according to claim 1 or 2, **characterized in that** it comprises a step of partial neutralization, wherein the pH of said sludge (Vf) or of said concentrated sludge (Vfc) is decreased by means of at least one second acidic reagent (Rac2); said step of partial neutralization being executed respectively following said separation step or said thickening step.

4. Method for treating waste water according to any one of the preceding claims, **characterized in that** it comprises a step of digesting said sludge (Vf) or said concentrated sludge (Vfc) by means of an anaerobic digester (7) in order to produce at least one biogas (Vg) and one digestate (D), said biogas (Vg) comprising at least one methane fraction (V_{CH4}) and a first fraction of carbon dioxide (V_{1,CO2}).

5. Method for treating waste water according to claim 4, **characterized in that** it also comprises a step of combustion of at least the methane fraction (V_{CH4}) of said biogas (Vg) in order to produce at least electrical energy and a combustion gas (GC), said combustion gas (GC) comprising at least one second fraction of carbon dioxide (V_{2,CO2}),
wherein, before said combustion step, said methane fraction (V_{CH4}) is mixed with air, with an air/methane ratio greater than 10:1, and preferably about 15:1.

6. Method for treating waste water according to claim 5, **characterized in that** at least said second fraction of carbon dioxide (V_{2,CO2}) of said combustion gas (GC) is added to said clarified waters (Vc) as first acidic reagent (Rac1) of said neutralization step in order to decrease the pH.

7. Plant for treating waste water in accordance with the method according to any one of the preceding claims **characterized in that** it comprises:
- a flow piping (100) arranged for receiving and conveying waste water (Vr) to be treated, said waste water (Vr) comprising at least one organic pollutant compound (C); said organic pollutant compound (C) comprising at least one from among: a carbohydrate, a protein, a lipid, a surfactant, a dye, a biological material;
- metering means for metering an alkaline reagent (Ra) into the waste water (Vr) coming from said flow piping (100) and obtaining alkaline waste water (Va); said alkaline reagent (Ra) being a strong base selected from among sodium hydroxide, potassium hydroxide, lithium hydroxide and their mixtures or compounds;
- a maturation unit (2), in fluid communication with said flow piping (100), and in which alkaline waste water (Va) coming from said flow piping (100) is susceptible of being introduced;
- a separation unit (3) in fluid communication with said maturation unit (2), said separation unit (3) being arranged for separating mature waste water (Vm) coming from said maturation unit (2) into at least clarified waters (Vc) and sludge (Vf);
- a neutralization unit (4) in fluid communication with said separation unit (3) and arranged for neutralizing said clarified waters (Vc) in order to obtain clarified neutral waters (Vcn);
- a thickening unit (13) in fluid communication with said separation unit (3), said thickening unit (13) being arranged for separating at least part of said sludge (Vf) coming from said separation unit (3) into an alkaline recovery liquid (Vaq), and concentrated sludge (Vfc).

8. Plant for treating waste water according to claim 7, **characterized in that** said thickening unit (13) is in fluid communication with said flow piping (100) in order to introduce said recovery liquid (Vaq) into said flow piping (100).

9. Plant for treating waste water according to claim 7 or 8, **characterized in that** it also comprises a pretreatment unit (14), which is placed upstream of said flow piping (100) and comprises at least one device selected from among: a filtration grid, a desander and a grease trap.

10. Plant for treating waste water according to any one of the claims from 7 to 9, **characterized in that** it also comprises:
- a stripping unit (11) placed upstream of said neutralization unit (4) and arranged for treating the clarified waters (Vc); said stripping unit (11) being provided with insufflation means, in order to insufflate a gaseous stream (G) into said clarified waters (Vc) and in order to extract at least one ammonia fraction from said clarified waters (Vc), obtaining a gaseous mixture (MG) comprising at least said ammonia fraction;
- an aerobic reactor (15) placed downstream of said neutralization unit (4) and arranged for reducing the concentration of residues of organic pollutant compound (C) in said clarified neutral waters (Vcn), by means of aerobic bacteria;
wherein said stripping unit (11), said neutralization unit (4), and said aerobic reactor (15) are attained by means of a single treatment tank, divided into at least three sections.
